Europäisches Patentamt

European Patent Office

Office européen des brevets

(11) Publication number: **0 253 458**
**A2**

(12) # EUROPEAN PATENT APPLICATION

(21) Application number: **87201594.6**

(22) Date of filing: **14.07.87**

(51) Int. Cl.⁴: **H01B 7/28**

(30) Priority: **16.07.86 IT 2113886**

(43) Date of publication of application:
**20.01.88 Bulletin 88/03**

(84) Designated Contracting States:
**DE ES FR GB SE**

(71) Applicant: **SOCIETA' CAVI PIRELLI S.p.A.**
**Piazzale Cadorna 5**
**I-20123 Milano(IT)**

(72) Inventor: **Gazzana Priaroggia, Paolo**
**Piazza S. Ambrogio, 8**
**Milan(IT)**
Inventor: **Lanfranconi, Gianmario**
**Via Martesana, 20**
**Trezzo Sull'Adda (MI)(IT)**
Inventor: **Metra, Pietro**
**Via Virgilio, 4**
**Varese(IT)**
Inventor: **Miramonti, Gianni**
**Via Cavour, 18**
**Magenta (MI)(IT)**

(74) Representative: **Mariani, Giorgio, Dr. et al**
**INDUSTRIE PIRELLI S.p.A. Direzione Brevetti**
**Piazzale Cadorna, 5**
**I-20123 Milano(IT)**

(54) **Direct current electric cables.**

(57) The invention concerns a direct current electric cable comprising a multi-layer insulation (3) impregnated with a non-migrating composition which has a "dropping point" temperature higher than the maximum temperature the cable may reach under service and contains in solution an electronegative gas.

## "DIRECT CURRENT ELECTRIC CABLES"

The present invention relates to direct current electric cables of the type in which the multi-layer insulation of the conductor, formed by a plurality of tape windings, is impregnated with a composition.

The conventional cables of the above indicated type, known as fully impregnated cables or cables having a fully impregnated insulation, are subjected to perforation risks, due to the presence, in the impregnated insulation of the conductor, of micro-cavities devoid of composition, which take place during the cable manufacturing and continuously change in size and position during the cable performance.

The micro-cavities, in the insulation of a composition-impregnated cable, are originated during the cable manufacture both on account of the high viscosity of the composition - persisting even at a comparatively high temperature - which hinders the perfect and total impregnation of the multi-layer insulation, and in consequence of the thermal shrinkage suffered by the composition during the cooling which occurs after the impregnation of the multi-layer insulation and precedes the application of the metal sheath around the latter.

When the cable is put into service, it is subjected to heating and cooling thermal cycles having the effect of originating movements of the insulating composition prevailingly radially of the cable.

In particular, during the heating thermal cycles, the composition impregnating the multi-layer insulation decreases in viscosity and is subjected to a thermal expansion greater than that of the other cable components. The consequent increase in the composition volume leads to a relevant reduction in the number and dimensions of the micro-cavities.

During the cooling thermal cycles, owing to the shrinkage suffered by the composition, the micro-cavities take place again, changing their position and size.

It is known that the micro-cavities in the composition-impregnated insulation of a cable result dangerous, in particular when they contain a gas at a very reduced pressure.

In fact, in these conditions, under the action of the electric stresses, the micro-cavities become the site of electric discharges, consequent to the possible ionization of a low pressure gas, which may lead to the perforation of the insulation and therefore to the cable breakdown.

In order to overcome this disadvantage, provision has been already made to introduce a gas under pressure into the direct current cables, placing the inside of the cable sheath into communication with tanks where said gas under pressure is contained, so as to ensure in any condition the filling of the micro-cavities with said gas.

These cables, known as "gas pressure insulation" cables, do not allow a satisfactory solution of the problem of eliminating the risk of perforation, owing to the following reasons. To fill the micro-cavities with gas under pressure, in whichever condition the cable in use may be, a high pressure is needed for the gas, in particular a pressure not lower than 14 bar in the cable inside. This involves - besides a relevant constructional complication - the presence of stresses in the sheath which are the higher the greater the gas pressure, so as to give rise to the risk of a cable breakdown due to the sheath rupture. Further, the maximum admissible length for the cables having a fully impregnated insulation involving gas pressure has values inversely proportional to the gas pressure and anyhow, in the practice, said length is limited in general to not more than 5-10 km in order to contain the pressure losses of the gas during its flowing along the cable so as to prevent - in the event of sheath cracks - the penetration of moisture in the cable.

To increase the above indicated maximum admissible length, cables have been built up, having a multi-layer insulation constituted by windings of tapes of insulating material previously impregnated with the composition, in which is present a gas under pressure, which can flow through the cable along a duct obtained in the same cable structure. Even in this way, however, it has not been possible to carry out cables having a maximum length exceeding 50 km, owing to the fact that, after a certain time from the cable initial use, plugs of composition are formed, which close the duct provided for the longitudinal flowing of gas along the cable.

The above indicated disadvantages restrict considerably the field of applications of the composition-impregnated cables and, in particular, make their use quite complicate in the submarine field, excluding their exployment in the event of very extended cables, longer than 50 km.

The present invention aims at providing direct current electric cables whose insulations is fully impregnated with composition, in which a satisfactory solution is given to the problem represented by perforation risks withouth applying any restriction in respect of the cable length and without introducing any constructive complication.

2

Accordingly, the object of the present invention is a direct current electric cable, fully impregnated with composition, which comprises at least a conductor covered by a semi-conductive screen, a multi-layer insulation, impregnated with a composition containing in solution an electronegative gas, formed by a plurality of windings of tapes of insulating material, a semi-conductive screen covering the insulation layer and a metal sheath, characterized in that said composition is a non-migrating composition having a dropping point temperature which exceeds by at least 5°C the maximum admissible temperature the cable may reach in use, and in that the electronegative gas dissolved in the composition, at a temperature lower than the dropping point of the latter, shows coefficient of diffusion - with respect to the composition - ranging between $3 \times 10^{-5}$ and $3 \times 10^{-6}$ cm²/sec.

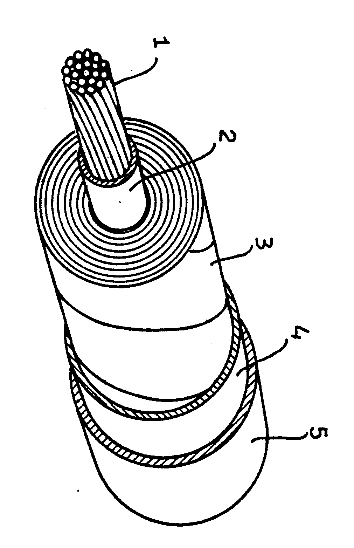

The present invention will be better understood from the following detailed description made, by way of non-limiting example, with reference to the figure of the attached table of drawing, which shows in perspective view and with parts broken away, a cable portion in accordance with the invention.

The cable represented in the figure has the structure described herebelow.

A semi-conductive screen 2, obtained for example by winding of semi-conductive tape, is arranged around a conductor, formed by a plurality of wires, for instance copper wires, stranded together. A multi-layer insulation 3, impregnated with an insulating composition containing in solution an electronegative gas, is arranged around the semi-conductive screen 2.

For the purposes of the present invention, the features of the composition and of the electro-negative gas will be illustrated hereunder.

The multi-layer insulation 3, formed by a plurality of windings of insulating tapes, made for instance of paper, cellulose, plastic material and the like, is externally covered by a semi-conductive screen 4 having for instance a structure identical to that of the semi-conductive screen 2.

A metal sheath 5, made for example of lead or aluminum, is placed on the semi-conductive screen 4. As said above, the multi-layer insulation 3 is impregnated with a composition containing in solution an electronegative gas.

As regards the cables in accordance with the present invention, the composition and the therein dissolved electronegative gas have the following characteristics:

The composition must be of the non-migrating type and must have a dropping point temperature higher by at least 5°C, and preferably by at least 10°C, than the maximum temperature which the cable may reach in use.

In this specification, the expressions "non-migrating composition" and "dropping point temperature" mean the following:

A "non-migrating composition" is a composition in which the viscosity curve, as a function of temperature, shows a sudden slope variation at a given temperature, called "dropping point temperature", whose value is determined in accordance with ASTM Standards D 566-76; at temperature higher than that of the dropping point, the composition behaves as a viscous liquid, whilst at lower temperatures the composition behaves practically as a solid body.

The "dropping point temperature" is the temperature at which - in the viscosity curve as a function of the temperature of a composition - a sudden slope variation takes place.

The electronegative gas dissolved in the composition must show - at temperatures lower than the dropping point of the latter - coefficient of diffusion, with respect to said composition, ranging between $3 \times 10^{-5}$ and $3 \times 10^{-6}$ cm²/sec.

Further characteristics of the composition and of the electronegative gas for a cable in accordance with the invention are the following:

-The shear modulus of elasticity G of the composition at room temperature (and precisely at a temperature ranging between 5°C and 35°C) is greater than or equal to, 0.8 kg/cm² to ensure dimensional stability to the existing micro-cavities even under the action exerted by the pressure of the therein contained electronegative gas.

-At a temperature higher than that of the composition "dropping point", the solubility of the therein dissolved electronegative gas is not smaller than $25 \times 10^{-2}$ normal cm³ of gas/bar for each cm³ of composition, so as to allow the easy and prompt dissolution in the composition of considerable amounts of electronegative gas without involving any modification of the plants at present used to produce cables having a composition-impregnated multi-layer insulation.

Once the above reported requirements are satisfied, both the chemical structure of the composition and the chemical nature of the gas may be those desired, it being understood that they besides possessing good dielectric properties - must be compatible with the material forming the cable components with which they come into contact, namely must not reduce any of their electrical or mechanical characteristics.

On the ground the above reported considerations regarding the composition and the gas, a technical skilled in this field will be able to determine - for each cable to be built up - the substances to be utilized, avoiding any risk of perforation during the cable use.

For example, to build up a direct current cable for which - in the designing phase - the maximum temperature to be reached in service is 60°C, the electronegative gas which can be used is sulphur hexafluoride in association with a compostion having the following recipe:

-Polyisobutylene      2.5%
-Microcrystalline wax      4%
-Mineral oil      93.5%

In fact, said composition had its dropping point at a temperature of 70°C and the coefficient of diffusion of sulphur hexafluoride, with respect to the above indicated particular composition, at temperature lower than the dropping point, is comprised in the range of the above reported values concerning this feature.

The solubility of sulphur hexafluoride, at temperatures exceeding the dropping point temperature of the particular composition considered, is higher than the above reported minimum admissible values in respect of the cables according to the invention.

In consequence of these features of the composition and of the electronegative gas, the cable manufacture does not involve any problem and does not require any modification of the plants at present used to build up cables having a composition-impregnated insulation.

In fact, to produce cables according to the invention, the multi-layer insulation applied to the conductor is at first impregnated in the usual way, into an impregnation tank (after its drying and degassing effected in said tank) with a composition having the characteristics provided by the invention and brought at a temperature higher than that of its dropping point; then the electronegative gas having the characteristics provided by the invention is introduced in the tank, at a pressure of some bar for the time sufficient to obtain the saturation of the composition.

After this time, the composition temperature is reduced to a value lower than the dropping point and cooling is kept on till to reach a temperature slightly exceeding the room temperature, the tank - after removal of the electronegative gas - is opened and the conductor, covered with the insulation impregnated with the composition containing the electronegative gas, is sent to the device intended to form the metal sheath surrounding the insulation.

During the time elapsing between the tank opening and the formation of the metal sheath around the insulation, no losses of gas from the composition impregnating said insulation are practically noticed, when the coefficient of diffusion of the gas throughout the composition is comprised in the critical range of values indicated for this feature.

Experimental tests illustrated hereunder demonstrate that, by adopting direct current cables in accordance with the invention, the risk of perforations is practically eliminated, withouth the need of involving any construction complication, without being disadvantageously liable to length limitation and without having to supply the cable under service with gas in a permanent way.

The experimental tests adopted are those entitled "loading Cycle and Polarity Reversal Tests" - recommended by the "Working Group 21-10, Study Committee No. 21 of CIGRE" and published in Issue No. 72 of review "Electra".

According to the modalities illustrated in said paper, sections, of each cable under examination, 30 metres in length, were subjected to 30 heating and cooling thermal cycles ranging between the room temperature and the maximum service temperature established for that cable, increasing at every 30 cycles the value of the continuous voltage applied to the cables till to determine the voltage at which the perforation took palce.

The following series of cables were submitted to the experimental tests:

-A series of cables in accordance with the invention, planned for a service temperature of 60°C and differing from one another only in respect of the characteristics (material, thickness, density, perviousness) of the tapes of insulating material used to build up the multi-layer solid insulation.

In all the cables of this series the multi-layer insulation was impregnated with the non-migrating composition, previously indicated by way of example, which was saturated with sulphur hexafluoride gas at a pressure of 2 bar and at a temperature of 120°C, i.e. a temperature higher than the "dropping point" temperature, which is 70°C, in accordance with the above described construction process. Further, all the cables of this series were enclosing a conductor constituted by a copper strand having a diameter of 39 mm, covered by a semi-conductive layer, by a multi-layer insulation having a thickness of 18 mm, provided externally with a semi-conductive screen and a lead sheath.

-A series of cables having a multi-layer insulation fully impregnated with a viscous composition, this expression meaning a composition in which the curve of viscosity as a function of temperature does not show sudden slope variations.

The viscous composition used had a recipe differing only for the exclusion of microcrystalline wax from that of the cables according to the invention.

For the remainder, the structure of the cables of this series and the tapes of insulating material used to form the multi-layer insulation were identical to those of the cables according to the invention.

-A series of cables having a multi-layer insulation associated with gas under pressure, in which said insulation was formed by windings of tapes equal to those to obtain cables according to the present invention, previously impregnated with the same composition, the gas contained in the cable being nitrogen at a pressure of 14 bar.

-A series of fully impregnated cables differing form those according to the invention only for the fact that the gas saturating the composition impregnated the insulation at 3 bar and at a temperature of 120°C was nitrogen.

By the experimental tests carried out with the above described modalities it was ascertained that in each cable series the voltage at which the perforation takes place varies in a range of values depending on the type of tapes of insulating material adopted to form the multi-layer insulation.

However, it was noted that, for any particular type of tapes of insulating material used to form the multi-layer insulation, the difference between the perforation voltage values ascertained for the cables of the various series remained constant.

More specifically, the percentage differences in the perforation voltage noticed for the above indicated various types of cables and those having an insulation fully impregnated with viscous composition were those reported in the following table:

| type of cable | % increase of perforation voltage in comparison with cables having insulation fully impregnated with viscous composition |
|---|---|
| Cables according to the invention | 50% |
| Cables having insulation formed by tapes previously impregnated with composition in association with nitrogen under pressure of 14 bar | 48% |
| Cables fully impregnated with nitrogen-saturated composition | 20% |

From an examination of the above reported data, the following consideration can be made:

With respect to the cables having an insulation fully impregnated with viscous composition, the percentage increase of perforation voltage, for the cables according to the invention, is of the same order of magnitude as that of the cables having an insulation formed by tapes previously impregnated with a composition in association with nitrogen under pressure of 14 bar.

This means that - by the cables according to the invention - risks of perforation during use are avoided, like in the cables having an insulation associated with a high gas pressure, without anyhow giving rise to the previously indicated drawbacks of said conventional cables.

In particular, the cables according to the invention are not subject to any limitation in length and appear able to delay the penetration of moisture in the multi-layer insulation in the event of sheath cracks.

Although a particular embodiment of the invention has been described and illustrated, it is understood that it includes in its scope any possible alternative embodiment which may be devised by a technician skilled in this field.

**Claims**

1. A direct current electric cable comprising at least a conductor (1) covered by a semi-conductive screen (2), a multi-layer insulation (3) formed by a plurality of windings of tapes of insulating material, impregnated with a composition containing in solution an electronegative gas, a semi-conductive screen (4) covering the insulating layer (3) and a metal sheath (5), characterized in that said composition is a non-migrating composition having a dropping point temperature which exceeds by at least 5°C the maximum admissible temperature the cable may reach in use, and in that the electronegative gas dissolved in the composition - at a temperature lower than the dropping point of the latter - shows a coefficient of diffusion, with respect to the composition, ranging between $3 \times 10^{-5}$ and $3 \times 10^{-6}$ cm$^2$/sec.

2. An electric cable as in claim 1, characterized in that the dropping point temperature of the composition exceeds, preferably by at least 10°C, the maximum admissible temperature the cable may reach during use.

3. An electric cable as in claim 1, characterized in that the non-migrating composition - at room temperature - has a shear modulus of elasticity not lower than 0.8 kg/cm².

4. An electric cable as in any claims 1 to 3, characterized in that the electronegative gas dissolved in the composition - at temperatures over the dropping point temperature of said composition - shows a solubility not lower than $25 \times 10^{-2}$ normal cm³ of gas/bar for cm³ of composition.

P. 560